# EUROPEAN PATENT APPLICATION

(11) **EP 4 717 938 A1**
(43) Date of publication of application: **01.04.2026**
(21) Application number: 24202399.2
(22) Date of filing: 25.09.2024
(51) Int. Cl.: F16C 19/06, F16C 23/08, F16C 25/08, F16C 35/077

(54) **BEARING FLANGE WITH A ROTATION AVOIDANCE MECHANISM**

(71) Applicant: KB Intellectual Property GmbH & Co. KG, 82049 Pullach (DE)
(72) Inventor: GRINDEL, Daniel, 80809 München (DE); HEBRARD, Gilles, 80809 München (DE); MARESCOT, Jean-Baptiste, 80809 München (DE); VERON, Frederic, 80809 München (DE); WEINHOLD, Thomas, 80809 München (DE)

(57) **Abstract**

A crankshaft assembly for a housing of an air compressor of an air supply and/or treatment system for a braking system of commercial vehicles comprises a compressor housing (3) of an air compressor; a crankshaft (1) which is rotatably mounted within the compressor housing (3); and at least one roller bearing (2a, 2b) which is configured such that it rotatably supports the crankshaft (1); wherein means are provided for enabling an axial movement of the at least one roller bearing (2b) within the compressor housing (3) together with an axial movement of the crankshaft (1) or of parts of the crankshaft (1). The crankshaft assembly is further configured such that the housing (3) comprises an inner, axially extending surface (7.1); the bearing (2b) comprises a radially outer race (4b) and a radially inner race (5b), wherein the radially inner race (5b) is mounted on the crankshaft (1); and the means for enabling an axial movement of the bearing (2b) within the housing (3) comprise a disc (8) which is disposed between the inner surface (7.1) of the housing (3) and the radially outer race (4b) of the bearing (2b), wherein the radially outer race (4b) of the bearing (2b) is mounted on the disc (8). The disc (8) comprises means (9, 9b) which are configured to lock the disc (8) in the circumferential direction such that the disc (8) is not able to rotate, particularly when the crankshaft (1) rotates. The locking means (9, 9b) comprise a protrusion (9, 9b) which extends radially outward from a radially outer edge (8b) of disc (8); and the inner surface (7.1) of the housing (3) comprises a recess (10) into which the protrusion (9, 9b) of disc (8) can engage.

## Description

The invention concerns a crankshaft assembly for a housing of an air compressor of an air supply and/or treatment system for a braking system of commercial vehicles.

The invention relates to a crankshaft assembly and to associated bearings that are used in compressors, particularly air compressors, that are used for air supply and/or air treatment systems for a braking system of commercial or transport vehicles. Such compressors typically comprise a compressor housing or case in which a shaft or crankshaft is rotatably mounted and supported. To this end, at least one bearing, particularly a roller or rolling bearing, is mounted in and held by the compressor housing, wherein the crankshaft in turn is mounted in and held by the bearing such that the crankshaft extends in an axial direction and can rotate within the housing. The bearing typically can be a radial roller bearing consisting of spherical balls or of essentially cylindrical rolling elements which roll on and within two radially opposed races, wherein one race is disposed radially inside and the other race is disposed radially outside of the rolling elements.

For air supply and/or air treatment systems for a braking system of commercial or transport vehicle, in order to obtain the required clean air, oil-free compressors are often used which do not allow oil in the compression chamber and which typically use self-lubricating components. Herein, the roller bearings for the compressor shaft may be lifetime greased rolling bearings, i.e. bearings to which a lubrication material, e.g. grease, is applied only once at the very beginning and then lasts for the entirety of their life cycle. Such bearings are generally ball bearings equipped with a lip seal at both ends. The lip seal is fixed and/or sealed against the outer ring, and the lip is acting against the inner ring, e.g. to decrease a sliding speed. Typically, the inner bearing volume is partially filled with grease, wherein there is an optimum filling ratio. The grease can be of different types, but typically no oil or a similar lubricant is used.

In such compressors, typically, the crankshaft is made of steel or cast-iron, whereas the compressor housing or case is made of a lightweight material, such as e.g. aluminum. Therein, the compressor housing may be a one-piece housing, i.e. made as one integral piece. The radially inner and outer bearing races are typically made of steel. The outer bearing race typically sits in and bears against an inner circumferential surface of the compressor housing such that the outer race does not move or spin with respect to the circumferential compressor housing surface. This may be accomplished by a press-fit of the outer bearing race within said circumferential housing surface.

However, due to different thermal and/or material expansion coefficients of the steel bearing outer race on the one hand and the material of the lightweight compressor housing (crank-case), e.g. aluminum, on the other hand, it is in practice difficult or even impossible to ensure a press-fit of the outer bearing race within the inner circumferential surface of the compressor housing over a wide temperature range. In practice, it may be required that such a temperature range is larger than +/- 40°C and may even range from -40°C to +80°C ambient temperature.

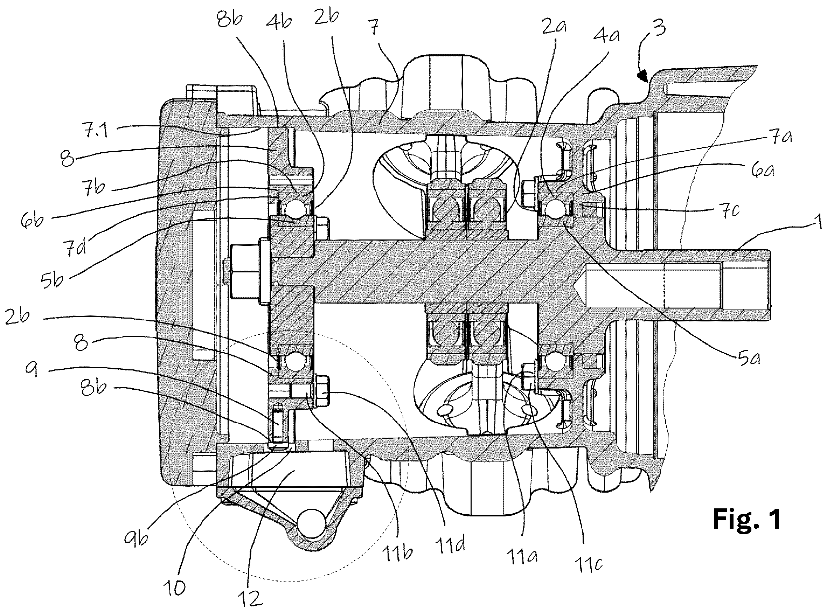

An example for an assembly of a compressor housing 3 in which a crankshaft 1 is rotatably supported, having, amongst others, the above-discussed features as known in the prior art, is shown in Fig. 1. It is noted, however, that Fig. 1 also shows the features of the invention. Crankshaft 1 is supported at an axially forward or first position (i.e. at the left-hand side in Fig. 1) and an axially rearward or second position (i.e. at the right-hand side in Fig. 1) via respective roller bearings 2a (at the right in Fig. 1) and 2b (at the left in Fig. 1) within the compressor housing 3 and/or within a particular crank case 7 which is a part of or disposed within the compressor housing 3.

It is to be understood that designations such as "forward, rearward, left-hand, right-hand" etc. are not meant to be limiting, but are only used for reasons of explanation and clarity. It will be appreciated that any other comparable, suitable arrangements are likewise encompassed by the invention.

The axially rearward roller bearing 2a comprises a radially outer race 4a and a radially inner race 5a. The axially forward roller bearing 2b comprises a radially outer race 4b and a radially inner race 5b. The radially inner races 5a, 5b are preferably fixedly mounted on the crankshaft 1. The radially outer races 4a, 4b should preferably bear against and/or be fixedly attached on respective inner circumferential, e.g. cylindrical and/or axially extending, surfaces 7a, 7b of the compressor housing 3 or the crank case 7, preferably by a press fit.

However, as discussed above, due to the different thermal and/or material expansion coefficients of the steel outer races 4a, 4b on the one hand and the lightweight material (e.g. aluminum) of the compressor housing 3 and/or the crank case 7 on the other hand, a safe, stable press-fit between said components is not guaranteed over a wider temperature range. Thus, under certain conditions, the outer races 4a, 4b may move, both in an axial and/or a circumferential direction, with respect to the inner circumferential surfaces 7a, 7b of the compressor housing 3 and/or the crank case 7.

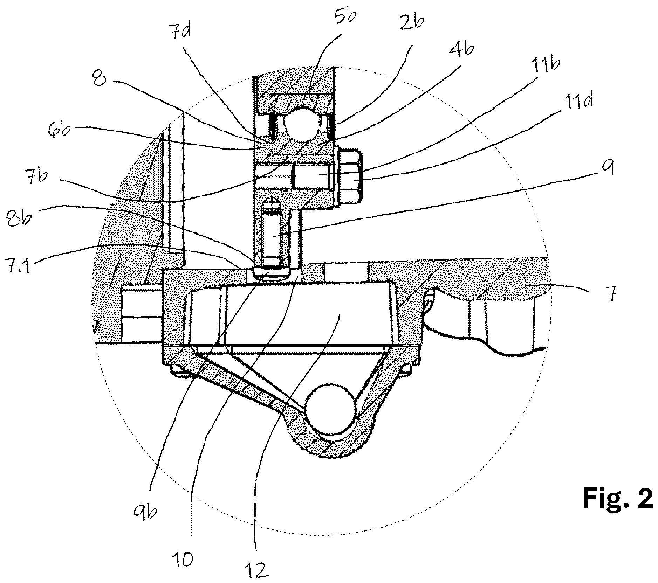

A common way to avoid a movement of the outer races 4a, 4b, particularly a spinning of the races 4a, 4b in a circumferential direction within the surfaces 7a, 7b, is to fix the races 4a, 4b by bolts 11a, 11b in the axial direction and to thereby press and lock the races 4a, 4b respectively against radially extending surfaces 7c, 7d of the compressor housing 3 and/or of the crank case 7. Surfaces 7c, 7d preferably extend radially inwards from the inner circumferential, e.g. cylindrical, surfaces 7a, 7b. Thus, together with the respective circumferential surface 7a, 7b, the respective radially extending surface 7c, 7d forms a shoulder or flange shoulder and/or a seat or flange seat 6a, 6b, as shown in Fig. 1. Thus, the races 4a, 4b are locked by the bolts 11a, 11b in the axial direction against said flange shoulder and/or flange seat 6a, 6b. Herein, particularly, the bolts 11a, 11b may have radially extending bolt heads 11c, 11d which respectively engage with one of the axial ends of the circumferential surfaces 7a, 7b and with an adjacent one of the axial side faces of the respectively associated bearing races 4a, 4b, 5a, 5b. That is, the bolt heads 11c, 11d lock the races 4a, 4b in the axial direction against the flange shoulder and/or flange seat 6a, 6b, as shown in Fig. 1 and in an enlarged view in Fig. 2.

However, when the bearings 2a, 2b are locked in the axial direction, the overall assembly of the crankshaft 1 within the compressor housing 3 cannot cope with and/or adapt to any issues and potential problems based on the different thermal and/or material expansion coefficients of the steel bearing outer races 4a, 4b, the lightweight material of the compressor housing 3 and/or of the crank case 7, and/or the material of the crankshaft 1 which is typically made of steel or cast-iron. Said problems may, e.g., reside in thermal distortions of the concerned components and a resulting increased friction between and wear of those components.

Therefore, it is an object of the invention to overcome the above discussed problems and to provide a respectively improved design for an assembly of an axial crankshaft, which is supported by a compressor housing or a crank case, in view of a potentially different heat expansion of the concerned, cooperating components. The object of the invention thus particularly aims to be able to use a steel or cast-iron crankshaft, which is supported by at least one roller bearing, in a lightweight, preferably one-piece, compressor housing or crank case, which is e.g. made of aluminum.

According to the present invention, this aim is achieved by a crankshaft assembly for a housing of an air compressor of an air supply and/or treatment system for a braking system of commercial vehicles according to claim 1. Advantageous embodiments of the invention are defined by the dependent claims 2 to 16.

Accordingly, a crankshaft assembly for a housing of an air compressor of an air supply and/or treatment system for a braking system of commercial vehicles comprises a housing, particularly a compressor housing and/or a crank case, of an air compressor; a crankshaft which is rotatably mounted within the compressor housing; and at least one roller bearing which is configured such that it rotatably supports the crankshaft. The crankshaft assembly of the invention is characterized by means for enabling an axial movement of the at least one roller bearing within the compressor housing together with an axial movement of the crankshaft or of parts of the crankshaft.

This assembly according to the invention can cope with and/or make up for an axial movement of the crankshaft or of parts thereof due to a thermal expansion or retraction of the crankshaft due to varying environmental temperatures. Thereby, detrimental thermal distortions of the involved, concerned components and a resulting increased friction between and wear of those components can be avoided or at least reduced.

In a preferred embodiment, the invention provides that the compressor housing comprises an inner, axially extending surface; the at least one bearing comprises a radially outer race and a radially inner race, wherein the radially inner race is mounted, preferably fixedly mounted, on the crankshaft; and the means for enabling an axial movement of the at least one roller bearing within the compressor housing comprise a plate or disc which is disposed between the inner surface of the compressor housing and the radially outer race of the bearing, wherein the radially outer race of the bearing is mounted, particularly fixedly mounted, on the disc.

Furthermore, the crankshaft assembly of the invention may be configured such that the plate or disc comprises a flange seat which is formed by an axially extending, circumferential inner surface of disc and a surface of disc extending radially inwards from said surface; wherein a radially outer surface of the outer race of the bearing lies against the axially extending, circumferential inner surface of the disc.

The crankshaft assembly may further be configured such that the bearing is fixedly mounted on the disc by axially extending bolts having radially extending bolt heads which engage with one of the axial ends of the circumferential surface of the disc and with the adjacent one of the axial side faces of the outer race of the bearing. The disc preferably extends perpendicularly to and coaxially with the rotation axis of the crankshaft.

In a further preferred embodiment, the invention provides that a radially outer edge of the disc loosely abuts against the axially extending inner surface of the compressor housing such that an axial movement of the disc is possible. Therein, the disc comprises means which are configured to lock the disc in the circumferential direction such that the disc is not able to rotate, particularly when the crankshaft rotates. Said means which are configured to lock the disc in the circumferential direction comprise a protrusion which extends radially outward from the radially outer edge of the disc; and the inner surface of the compressor housing comprises a recess into which the protrusion of the disc can engage. Therein, the protrusion of the disc may be formed by a bolt having a bolt head; and the recess provided in the inner surface of the compressor housing may be formed by a longitudinal, axially extending slot; wherein the slot is configured such that it can receive the bolt or its bolt head such that the bolt or its bolt head can move in an axial direction within the slot. The bolt can be configured as a threaded screw such that the bolt can be screwed into or out of a corresponding hole provided in the radially outer edge of the disc.

The crankshaft assembly of the invention may furthermore be configured such that the longitudinal slot extends radially through the compressor housing to the outside thereof such that the bolt can be assembled on the disc through the slot from the outside of the compressor housing. The longitudinal slot may further be positioned in an air inlet cavity of the compressor housing such that only filtered air can enter through the slot into the compressor housing.

In an embodiment which is an alternative to the precedingly described embodiment, the means which are configured to lock the disc in the circumferential direction such that the disc is not able to rotate comprise a recess provided in the radially outer edge of the disc; and the inner surface of the compressor housing comprises a protrusion which extends radially inward from the inner surface of the compressor housing; wherein the recess in the radially outer edge of the disc and the protrusion which extends from the inner surface of the compressor housing are configured such that said protrusion can engage into said recess.

In a further embodiment of the invention, the crankshaft assembly may be configured such that it comprises a crank case which is a part of or is disposed within the compressor housing, wherein the crankshaft is rotatably mounted within the crank case; wherein, instead of in the compressor housing, the axially extending inner surface of the compressor housing and the recess provided in the inner surface of the compressor housing are respectively positioned in the crank case; and wherein the disc is disposed within the crank case.

The crankshaft assembly of the invention may furthermore be configured such that it comprises at least one roller bearing which is associated with the means for enabling an axial movement of this roller bearing within the compressor housing and/or the crank case; and at least one other roller bearing which is configured such that it also rotatably supports the crankshaft, but which is not axially movable within the compressor housing and/or the crank case.

In a further embodiment of the invention, the crankshaft is made of steel or cast-iron; the compressor housing and/or the crank case is made of a lightweight material, preferably aluminum; and the inner and outer races of the roller bearings are made of steel.

Further details and advantages of the invention will be explained in the following detailed description of an embodiment of the invention in combination with the attached drawings.
Fig. 1 shows a cut-away view of a crankshaft assembly according to the invention.
Fig. 2 shows an enlarged view of a detail of the crankshaft assembly of Fig. 1.

Fig. 1 shows an axial crankshaft 1 which is essentially arranged in and supported by a compressor housing 3 and/or a separate crank case 7 by means of the roller bearings 2a, 2b. This arrangement essentially comprises the above discussed features and components.

Herein, bearing 2a at the axially rearward or second position of the crankshaft 1 (i.e. at the right-hand side in Fig. 1) is configured as a fixed bearing which is directly locked to the inner (flange) shoulder or seat 6a of the crank case 7, wherein the shoulder/seat 6a is created in the crank case 7 by the circumferential surface 7a and the surface 7c extending radially inwards therefrom. Therein, bearing 2a may be locked and fixed by axially extending bolts 11a, or particularly by radially extending bolt heads 11c thereof, and/or by a suitable, stable press fit.

Bearing 2b at the axially forward or first position of the crankshaft 1 (i.e. at the left-hand side in Fig. 1) is generally configured as a movable bearing, i.e. a bearing which is movable particularly in the axial direction. This possibility of an axial movement of bearing 2b is provided particularly to cope with a potential axial movement of the crankshaft 1 or of parts thereof due to a thermal expansion or contraction of the crankshaft 1 due to varying ambient temperatures.

Also, the compression process itself creates varying temperatures. For example, when the compressor was not working for a longer time, it may be cooled down to ambient temperature. When the compressor is restarted, the compressor parts will heat up differently until the compressor reaches a final temperature, which may typically be 150°C higher than the ambient temperature. Depending on the heat transfer ability of each part of the compressor, the parts may even have different temperatures. So, this means that the temperature difference (delta) as explained in the introductory part above may in reality even be higher than just the usage range of the ambient temperatures (e.g. about double).

Therefore, bearing 2b, and particularly the outer race 4b thereof, is fixedly mounted to or arranged within a movable plate or disc or flange disc 8 extending perpendicularly to and substantially coaxially with the axis of the crankshaft 1 and radially outwards of the bearing 2b. The plate or disc 8 has a (flange) shoulder or seat 6b which, similar as in the case of the seat 6a of the crank case 7 at the position of the rearward bearing 2a, is created by a circumferential inner surface 7b of disc 8 and a surface 7d extending radially inwards therefrom. Herein, the radially outside surface of outer race 4b of bearing 2b bears against the circumferential inner surface 7b of disc 8, i.e. the circumferential surface 7b is arranged radially outwards from the outer race 4b. Therein, bearing 2b may be locked and fixed on disc 8, particularly fixed against the flange shoulder 6b of flange disc 8, by axially extending bolts 11b, or particularly by radially extending bolt heads 11d thereof, and/or by a suitable, stable press fit, as shown in Figs. 1 and 2.

The radially inner race 5b of bearing 2b is fixedly attached at and locked against the crankshaft 1 or parts thereof. For this locking effect, the same or similar or analogous features and aspects may be given and apply as they have been explained above for the effect of locking the outer race 4b of bearing 2b against the disc 8. Therewith, disc 8 is movably mounted on the crankshaft 1 via bearing 2b, i.e. crankshaft 1 can rotate with respect to disc 8 via bearing 2b.

Besides, the inner race 5b can be locked by a press fit against the crankshaft 1 or parts thereof. It is not fixed by axially extending bolts as the outer race 4b is. So, the material of the crankshaft 1, an excentre ring and the inner bearing race 5b can have an equal or very similar heat expansion coefficient (i.e. cast-iron-steel-steel), while the outer bearing race 4b and the disc 8 can have a different heat expansion coefficient (i.e. steel-aluminum).

Disc 8 is preferably made of the same lightweight material as the crank case 7, e.g. aluminum.

Disc 8 is configured to be movable in the axial direction. Accordingly, if the crankshaft 1 or parts thereof move in an axial direction due to a thermal expansion or contraction of the crankshaft 1 due to varying ambient temperatures, disc 8 moves together with the crankshaft 1 in the concerned axial direction due to the connection of disc 8 with the crankshaft 1 via bearing 2b.

The movable disc 8 is centered within the compressor housing 3 and/or the crank case 7 by a loose fit with respect to an inner diameter 7.1 of the crank case 7 (or of the compressor housing 3). Accordingly, a radially outer edge 8b of disc 8 loosely lies against or abuts an inner, substantially axially extending surface of crank case 7 having the inner diameter 7.1. This loose fit is configured such that an axial movement of the disc 8 is possible.

To avoid that disc 8 is spinning or rotating in this loose fit, particularly as crankshaft 1 rotates, means are provided which lock the disc 8 in the circumferential, rotational direction, but which still enable an axial movement of the disc 8.

To this end, disc 8 is provided at a radially outer edge 8b with an extension or protrusion 9 which extends radially outward from disc 8 and which engages with a recess 10 provided in the inner surface of crank case 7 having the inner diameter 7.1. Particularly, said extension or protrusion is formed by a bolt 9 which is attached at or in disc 8, particularly at the radially outer edge 8b of disc 8. Therein, bolt 9, and particularly a bolt head 9b of bolt 9, extends radially outward from disc 8. Bolt 9 may be configured as a threaded screw, so that it can be screwed into or out of a corresponding hole in the radially outer edge 8b of disc 8. Thereby, the radial position of bolt 9 and particularly of its bolt head 9b can be adjusted such that it extends radially more or less from the disc 8.

The recess 10 provided in the inner surface of crank case 7 is preferably formed by a longitudinal slot 10 extending in the axial direction. Therein, slot 10 is configured such that it can receive bolt 9 or its bolt head, respectively, such that bolt head 9 can move, particularly slide, in an axial direction within slot 10, both in a forward or rearward direction. Thus, if crankshaft 1, or a part thereof which carries the bearing 2b, moves in an axial direction, simultaneously bolt head 9 moves within the longitudinal slot 10 in the same axial direction. Accordingly, bolt 9 engaging in slot 10 may be designated as an anti-rotation bolt. This arrangement is particularly visible in Fig. 2 which is an enlarged view of the detail of the crankshaft assembly as encircled in Fig. 1.

Thereby, this overall assembly can cope with and/or make up for and/or compensate an axial movement of the crankshaft 1 due to a thermal expansion or retraction of the crankshaft 1 due to varying environmental temperatures.

This design allows to assemble all parts of the bearing and crankshaft assembly within the compressor housing in the axial direction from the loose fit side, i.e. the left-hand side in Fig. 1 near the position of the disc 8, to the crankshaft 1. Finally, as soon as disc 8 is in its designated position, the anti-rotation bolt 9 can be assembled on disc 8 through the longitudinal slot 10 from the outside of the crank case 7 and/or the compressor housing 3. That is, slot 10 extends radially through the crank case 7 and/or the compressor housing 3 to the outside thereof, as is visible in Fig. 2.

In a further embodiment, the longitudinal slot 10 can be located in an air inlet cavity 12 of the compressor housing 3 and/or the crank case 7 so that only filtered air can enter through the non-airtight longitudinal slot 10 into the crank case 7 and/or the compressor housing 3, see Fig. 2.

### LIST OF REFERENCE SIGNS

- 1: crankshaft
- 2a: roller bearing
- 2b: roller bearing
- 3: compressor housing
- 4a: radially outer race
- 4b: radially outer race
- 5a: radially inner race
- 5b: radially inner race
- 6a: flange shoulder/flange seat
- 6b: flange shoulder/flange seat
- 7: crank case
- 7a: circumferential surface
- 7b: circumferential surface
- 7c: radially extending surface
- 7d: radially extending surface
- 7.1: inner surface/inner diameter of crank case
- 8: disc, flange disc, plate
- 8b: radially outer edge of disc
- 9: protrusion, bolt
- 9b: bolt head
- 10: recess, slot
- 11a: bolt
- 11b: bolt
- 11c: bolt head
- 11d: bolt head
- 12: air inlet cavity

## Claims

1. Crankshaft assembly for a housing of an air compressor of an air supply and/or treatment system for a braking system of commercial vehicles, comprising
- a compressor housing (3) of an air compressor;
- a crankshaft (1) which is rotatably mounted within the compressor housing (3); and
- at least one roller bearing (2a, 2b) which is configured such that it rotatably supports the crankshaft (1);
**characterized by**
- means for enabling an axial movement of the at least one roller bearing (2b) within the compressor housing (3) together with an axial movement of the crankshaft (1) or of parts of the crankshaft (1).

2. Crankshaft assembly according to claim 1, **characterized in that**
- the compressor housing (3) comprises an inner, axially extending surface (7.1);
- the at least one bearing (2b) comprises a radially outer race (4b) and a radially inner race (5b), wherein the radially inner race (5b) is mounted on the crankshaft (1); and
- the means for enabling an axial movement of the at least one roller bearing (2b) within the compressor housing (3) comprise a disc (8) which is disposed between the inner surface (7.1) of the compressor housing (3) and the radially outer race (4b) of the bearing (2b), wherein the radially outer race (4b) of the bearing (2b) is mounted on the disc (8).

3. Crankshaft assembly according to claim 2, **characterized in that**
- disc (8) comprises a flange seat (6b) which is formed by an axially extending, circumferential inner surface (7b) of disc (8) and a surface (7d) of disc (8) extending radially inwards from said surface (7b);
- wherein a radially outer surface of the outer race (4b) of bearing (2b) lies against the axially extending, circumferential inner surface (7b) of disc (8).

4. Crankshaft assembly according to claim 3, **characterized in that**
- bearing (2b) is fixedly mounted on disc (8) by axially extending bolts (11b) having radially extending bolt heads (11d) which engage with one of the axial ends of the circumferential surface (7b) of disc (8) and with the adjacent one of the axial side faces of the outer race (4b) of bearing (2b).

5. Crankshaft assembly according to any one of claims 2 to 4, **characterized in that**
- disc (8) extends perpendicularly to and coaxially with the rotation axis of the crankshaft (1).

6. Crankshaft assembly according to any one of claims 2 to 5, **characterized in that**
- a radially outer edge (8b) of disc (8) loosely abuts against the axially extending inner surface (7.1) of the compressor housing (3) such that an axial movement of the disc (8) is possible.

7. Crankshaft assembly according to any one of claims 2 to 6, **characterized in that**
- the disc (8) comprises means (9, 9b) which are configured to lock the disc (8) in the circumferential direction such that the disc (8) is not able to rotate, particularly when the crankshaft (1) rotates.

8. Crankshaft assembly according to claim 7, **characterized in that**
- the means (9, 9b) which are configured to lock the disc (8) in the circumferential direction comprise a protrusion (9, 9b) which extends radially outward from the radially outer edge (8b) of disc (8); and
- the inner surface (7.1) of the compressor housing (3) comprises a recess (10) into which the protrusion (9, 9b) of disc (8) can engage.

9. Crankshaft assembly according to claim 7, **characterized in that**
- the means which are configured to lock the disc (8) in the circumferential direction comprise a recess provided in the radially outer edge (8b) of disc (8); and
- the inner surface (7.1) of the compressor housing (3) comprises a protrusion which extends radially inward from the inner surface (7.1) of the compressor housing (3);
- wherein the recess in the radially outer edge (8b) of disc (8) and the protrusion which extends from the inner surface (7.1) of the compressor housing (3) are configured such that said protrusion can engage into said recess.

10. Crankshaft assembly according to claim 8, **characterized in that**
- the protrusion (9, 9b) of disc (8) is formed by a bolt (9) having a bolt head (9b); and
- the recess (10) provided in the inner surface (7.1) of the compressor housing (3) is formed by a longitudinal, axially extending slot (10);
- wherein the slot (10) is configured such that it can receive the bolt (9) or its bolt head (9b) such that the bolt (9) or its bolt head (9b) can move in an axial direction within the slot (10).

11. Crankshaft assembly according to claim 10, **characterized in that**
- the bolt (9) is configured as a threaded screw such that the bolt (9) can be screwed into or out of a corresponding hole provided in the radially outer edge (8b) of disc (8).

12. Crankshaft assembly according to claim 10 or claim 11, **characterized in that**
- the longitudinal slot (10) extends radially through the compressor housing (3) to the outside thereof such that the bolt (9) can be assembled on disc (8) through the slot (10) from the outside of the compressor housing (3).

13. Crankshaft assembly according to any one of claims 10 to 12, **characterized in that**
- the longitudinal slot (10) is positioned in an air inlet cavity (12) of the compressor housing (3) such that only filtered air can enter through the slot (10) into the compressor housing (3).

14. Crankshaft assembly according to any one of the preceding claims, **characterized in that**
- it comprises a crank case (7) which is a part of or is disposed within the compressor housing (3), wherein the crankshaft (1) is rotatably mounted within the crank case (7);
- wherein, instead of in the compressor housing (3), the axially extending inner surface (7.1) of the compressor housing (3) and the recess (10) provided in the inner surface (7.1) of the compressor housing (3) are respectively positioned in the crank case (7); and
- wherein the disc (8) is disposed within the crank case (7).

15. Crankshaft assembly according to any one of the preceding claims, **characterized in that** it comprises
- at least one roller bearing (2b) which is associated with the means for enabling an axial movement of this roller bearing (2b) within the compressor housing (3) and/or the crank case (7); and
- at least one roller bearing (2a) which is configured such that it also rotatably supports the crankshaft (1), but which is not axially movable within the compressor housing (3) and/or the crank case (7).

16. Crankshaft assembly according to any one of the preceding claims, **characterized in that**
- the crankshaft (1) is made of steel or cast-iron;
- the compressor housing (3) and/or the crank case (7) is made of a lightweight material, preferably aluminum; and
- the inner and outer races (4a, 4b, 5a, 5b) of the roller bearings (2a, 2b) are made of steel.
